(19) Europäisches Patentamt
European Patent Office
Office européen des brevets

(11) **EP 3 785 000 B1**

(12) **FASCICULE DE BREVET EUROPEEN**

(45) Date de publication et mention de la délivrance du brevet:
**01.06.2022  Bulletin 2022/22**

(21) Numéro de dépôt: **19729333.5**

(22) Date de dépôt: **19.04.2019**

(51) Classification Internationale des Brevets (IPC):
**G01K 7/42** *(2006.01)*     **G01K 13/02** *(2021.01)*

(52) Classification Coopérative des Brevets (CPC):
**G01K 7/42; G01K 13/02; G01K 13/024**

(86) Numéro de dépôt international:
**PCT/FR2019/050951**

(87) Numéro de publication internationale:
**WO 2019/207244 (31.10.2019 Gazette 2019/44)**

(54) **PROCÉDÉ ET SYSTÈME DE TRAITEMENT D'UN SIGNAL DE MESURE D'UNE TEMPÉRATURE DÉLIVRÉ PAR UN CAPTEUR**

VERFAHREN UND SYSTEM ZUR VERARBEITUNG EINES VON EINEM SENSOR GELIEFERTEN TEMPERATURMESSSIGNALS

METHOD AND SYSTEM FOR PROCESSING A TEMPERATURE MEASUREMENT SIGNAL DELIVERED BY A SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2018  FR 1853666**

(43) Date de publication de la demande:
**03.03.2021  Bulletin 2021/09**

(73) Titulaire: **SAFRAN AIRCRAFT ENGINES**
**75015 Paris (FR)**

(72) Inventeur: **GIRAUDET DE BOUDEMANGE, Benoît Pierre Marie**
**75001 Paris (FR)**

(74) Mandataire: **Cabinet Beau de Loménie**
**158, rue de l'Université**
**75340 Paris Cedex 07 (FR)**

(56) Documents cités:
**EP-A1- 2 373 965     WO-A1-2010/067009**
**US-A- 5 080 496**

**Description**

Arrière-plan de l'invention

L'invention se rapporte au domaine général des mesures, réalisées à l'aide de capteurs, de paramètres tels que par exemple la température d'un fluide.

Elle concerne plus particulièrement le traitement d'un signal de mesure délivré par un capteur de température.

L'invention a ainsi une application privilégiée mais non limitative dans le domaine de l'aéronautique, et notamment dans le domaine des systèmes de pilotage de moteurs d'aéronef tels que des turboréacteurs.

De façon connue, il est nécessaire, pour réguler et adapter le pilotage d'un turboréacteur aux diverses contraintes d'un vol, de mesurer la température de différents flux gazeux traversant le turboréacteur (on parle de températures de veines). A cette fin, on utilise des capteurs de température tels que des sondes ou des thermocouples, positionnés à différents endroits des veines d'écoulement des flux gazeux.

Ces capteurs de température souffrent généralement, lors d'une mesure, d'une certaine inertie, propre à chaque capteur, et qui dépend notamment de la masse (ou de la taille) de ce capteur. Cette inertie se traduit par un décalage temporel entre le moment où la mesure est réalisée par le capteur et le moment où la valeur du signal délivré par le capteur est égale à une valeur de réponse idéale à cette mesure. On parle « d'effet de trainage » de la mesure. Un tel effet peut provoquer des dysfonctionnements du turboréacteur du fait d'une mauvaise adaptation de la régulation de celui-ci, et ce notamment lors de variations rapides des températures des flux gazeux pour lesquelles l'effet de trainage se manifeste plus particulièrement.

Pour pallier cet inconvénient, il existe des techniques permettant de corriger les signaux de mesure délivrés par un capteur de température, en compensant l'effet de trainage induit par l'inertie de ce capteur. De telles techniques sont décrites par exemple dans les documents US 5,080,469 A, WO 2010/067009 A1, et EP 2 373 965 A1.

De façon générale, ces techniques s'appuient d'une part, sur une modélisation numérique de la température mesurée par le capteur (aussi connue sous le nom de modèle dynamique de la mesure) qui offre une bonne représentativité des écarts relatifs lors de l'évolution de la température, et d'autre part, sur une modélisation numérique de l'inertie du capteur à l'aide d'un filtre paramétré par une estimation de la constante de temps de ce capteur. De façon connue en soi, la constante de temps d'un capteur de mesure caractérise son temps de réponse, c'est-à-dire son inertie. A partir de la modélisation numérique de la température mesurée et de la modélisation de l'inertie du capteur il est possible de déterminer un signal de compensation de l'effet de trainage induit par l'inertie du capteur et de corriger le signal de mesure délivré par le capteur en lui ajoutant le signal de compensation.

Le document US 5,080,496 utilise, pour estimer la constante de temps du capteur, un abaque figé indiquant une valeur moyenne de la constante de temps en fonction d'un débit d'écoulement du fluide dans lequel se trouve le capteur.

Un tel abaque est établi pour des gabarits de temps de réponse et des conditions prédéterminés, et ne tient pas compte de la dispersion de l'inertie d'un capteur de température par rapport à un autre. Or, les technologies de fabrication actuelles ne permettent pas de fabriquer, à moindre coût, des capteurs de température pour le pilotage des turboréacteurs qui respectent un gabarit de temps de réponse peu dispersé. Par conséquent, il est difficile d'avoir des abaques adaptés aux différents capteurs de température considérés. Et de nombreux problèmes ont été mis en évidence lorsque les constantes de temps des capteurs embarqués sur un turboréacteur sont éloignées des valeurs données par ces abaques.

Par ailleurs, pour obtenir une estimation de la constante de temps à partir d'un tel abaque, il est nécessaire, au préalable, d'estimer le débit d'écoulement de fluide dans lequel se trouve le capteur. La mise en œuvre d'estimateurs complémentaires sur le turboréacteur est donc nécessaire, ce qui rend d'autant plus complexe la correction des mesures.

Pour pallier ces inconvénients, le document WO2010/067009 propose d'estimer en temps réel la constante de temps du capteur spécifique considéré à partir du signal de mesure délivré par le capteur et d'un signal modélisé représentatif de la température mesurée par le capteur. L'estimation de la constante de temps est ensuite utilisée pour corriger le signal de mesure délivré par le capteur (i.e. compensation de l'effet de trainage). La correction apportée au signal de mesure est ainsi adaptée au capteur de température utilisé, et ce quelle que soit son inertie. Il est ainsi possible d'utiliser des capteurs de température dont les constantes de temps respectives présentent une dispersion importante, et peuvent être élevées. Ceci permet d'avoir recours à des capteurs de température plus solides mécaniquement et moins coûteux.

Objet et résumé de l'invention

L'invention propose une alternative aux techniques de compensation de l'erreur de trainage du capteur de température proposées dans l'art antérieur qui permet de fournir un signal de mesure précis de la température mesurée par le capteur.

Plus spécifiquement, l'invention propose un procédé de traitement d'un signal de mesure T1 d'une température délivré par un capteur, comprenant :

- une étape de modélisation numérique, par un signal modélisé T2, de la température mesurée par le capteur ; et
- une étape d'estimation d'un signal d'erreur de trainage pour ce capteur, à partir du signal modélisé T2 et d'un signal T3 obtenu par filtrage du signal modélisé, ce filtrage étant paramétré par une estimation d'une constante de temps ($\tau$) du capteur.

Ce procédé de traitement est remarquable en ce qu'il comprend en outre une étape d'obtention d'un signal de température en ajoutant à un signal T4 dérivé du signal de mesure T1, le produit d'un paramètre réel K par un signal résultant de la soustraction du signal T4 au signal modélisé T2, et en ce que la valeur du paramètre K appliquée lors de l'étape d'obtention varie dans le temps et dépend de la valeur du signal d'erreur de trainage estimé, ladite valeur du paramètre K appliquée étant prise égale à 0 lorsque la valeur du signal d'erreur de trainage est nulle et à 1 lorsque la valeur absolue du signal d'erreur de trainage est supérieure à un premier seuil prédéterminé.

Corrélativement, l'invention vise aussi un système de traitement d'un signal de mesure T1 d'une température délivré par un capteur, comprenant :

- un module de modélisation numérique, configuré pour modéliser la température mesurée par le capteur au moyen d'un signal modélisé T2 ; et
- un module d'estimation, configuré pour estimer un signal d'erreur de trainage pour ce capteur à partir du signal modélisé T2 et d'un signal T3 obtenu par filtrage du signal modélisé, le filtrage étant paramétré par une estimation d'une constante de temps du capteur.

Le système de traitement est remarquable en ce qu'il comprend en outre un module d'obtention, configuré pour obtenir un signal de température en ajoutant à un signal T4 dérivé du signal de mesure T1, le produit d'un paramètre réel K par un signal résultant de la soustraction du signal T4 au signal modélisé T2, et en ce que la valeur du paramètre K appliqué par le module d'obtention dépend de la valeur du signal d'erreur de trainage estimé par le module d'estimation, ladite valeur du paramètre K appliquée par le module d'obtention étant prise égale à 0 lorsque la valeur du signal d'erreur de trainage est nulle et à 1 lorsque la valeur absolue du signal d'erreur de trainage est supérieure à un premier seuil prédéterminé.

Par signal dérivé du signal de mesure T1, on entend un signal obtenu à partir de celui-ci. Il peut s'agir par exemple du signal de mesure T1 lui-même ou d'un signal de mesure corrigé par exemple pour tenir compte de l'inertie du capteur en lui ajoutant une estimation de l'erreur de trainage.

Par ailleurs, lorsqu'il est fait référence à un signal d'erreur de trainage, il ne s'agit pas d'un signal physique mesuré à proprement parler par un capteur, mais de valeurs estimées de l'erreur de trainage. Ces valeurs peuvent être déterminées à partir notamment d'une estimation en temps réel de la constante de temps de la sonde de température.

La température mesurée par le capteur est par exemple une température d'un fluide s'écoulant dans un moteur d'aéronef (ex. une température de veine). Le signal de température obtenu grâce à l'invention peut typiquement être utilisé par un dispositif de régulation ou de pilotage du moteur de l'aéronef pour adapter le pilotage, c'est-à-dire la régulation, du moteur à diverses contraintes. L'invention a ainsi une application privilégiée mais non limitative dans le domaine de l'aéronautique.

La logique proposée par l'invention est simple et avantageuse car elle tire profit des propriétés et des atouts de chaque signal dont on dispose (signal de mesure et signal modélisé) pour élaborer un signal de température précis :

- le signal de mesure du capteur est utilisé lorsque la température mesurée est stabilisée et le capteur fonctionne de façon stabilisée (ce qui correspond à une stabilisation de la température sur un intervalle de temps dépassant la constante de temps du capteur), c'est-à-dire lorsqu'on ne constate plus d'effet de trainage sur la mesure réalisée par le capteur, et que ce signal donne une bonne représentation en valeur absolue de la température mesurée ;
- le signal modélisé est utilisé lorsque le capteur de température se trouve au contraire dans une phase transitoire (correspondant à des variations « rapides » de la température) dans laquelle l'inertie du capteur se fait ressentir ; de façon connue, les modélisations numériques offrent généralement une bonne représentativité des écarts relatifs de température, ce qui est avantageux pour les phases transitoires ; et
- une transition entre les deux est assurée via le paramètre K de sorte à garantir les besoins en précision du signal de température obtenu.

La valeur du paramètre K qui permet de pondérer l'influence du signal de mesure et du signal modélisé dans le calcul du signal de température, varie dans le temps en fonction de la valeur du signal d'erreur de trainage. Cette valeur du signal d'erreur de trainage permet d'indiquer de façon précise et en temps réel les différentes phases de fonctionnement du capteur qui régissent les moments où l'un ou l'autre des signaux (signal de mesure et signal modélisé) présentent une meilleure estimation de la température l'un par rapport à l'autre. L'invention ne se contente donc pas de détecter les variations de la température, qui pourraient par exemple être identifiées dans le cas d'une température de fluide s'écoulant dans un moteur d'aéronef, en observant les variations du régime de rotation du moteur. Mais elle s'attache, pour déterminer quel signal favoriser en raison de sa meilleure représentativité de la température que l'on cherche à estimer, au critère même qui indique le fonctionnement courant du capteur de température considéré (i.e. est-ce qu'il y a ou non une erreur de trainage sur la température courante mesurée), et qui tient compte des imperfections de ce capteur et plus particulièrement de son inertie propre.

L'invention propose donc une alternative aux techniques de compensation de l'erreur de trainage de l'état de la technique qui permet, lors de transitoires de température, d'exploiter pleinement la précision du modèle numérique sur les écarts relatifs de température. Cette technique alternative permet, dans certains contextes d'utilisation, de s'affranchir d'imprécisions susceptibles d'affecter certaines techniques de compensation de l'art antérieur.

La loi de variation du paramètre K en fonction des valeurs du signal d'erreur de trainage peut prendre différentes formes. Cette loi détermine comment on passe, dans la logique proposée par l'invention, du signal de mesure au signal modélisé. Elle peut être déterminée de façon expérimentale.

Dans un mode particulier de réalisation, la valeur du paramètre K varie de façon linéaire entre les valeurs 0 et 1 en fonction de la valeur du signal d'erreur de trainage estimé lorsque la valeur absolue du signal d'erreur de trainage varie entre la valeur nulle et le premier seuil prédéterminé.

Ce mode de réalisation est particulièrement simple à mettre en œuvre et offre une transition douce et continue entre le signal de mesure et le signal modélisé. Ceci a un avantage particulier dans le domaine de l'aéronautique lorsque le signal de température obtenu est utilisé notamment pour piloter un moteur d'aéronef, l'utilisation d'une loi linéaire permettant de ne pas perturber le pilotage, c'est-à-dire la régulation, du moteur.

Dans un mode particulier de réalisation lié au domaine de l'aéronautique, la température est une température d'un fluide s'écoulant dans un moteur d'aéronef et, lorsqu'il est détecté simultanément que la valeur du signal d'erreur de trainage estimé est nulle et que ladite température connaît une succession de variations rapides, la valeur du paramètre K est maintenue égale à la valeur qu'il avait avant ladite détection ou n'est autorisée à varier par rapport à cette valeur que d'une quantité maximale prédéterminée.

Ce mode de réalisation permet avantageusement de tenir compte de phénomènes pouvant affecter un moteur d'aéronef et qui se traduit par un enchaînement de hausses et de baisses (i.e. transitoires) de la température du fluide. Ces phénomènes sont par exemple dus à une succession d'accélérations et de décélérations rapides du moteur (par exemple, une décélération rapide du moteur suivie d'une accélération rapide du moteur).

En présence de tels phénomènes de succession d'accélération(s) et de décélération(s), les inventeurs ont constaté que le signal d'erreur de trainage peut s'annuler bien que la température ne soit pas stabilisée (et *a fortiori* le capteur de température non plus). En effet, conformément à l'invention, le signal d'erreur de trainage est estimé à partir d'un signal modélisé et du signal modélisé filtré par un filtrage tenant compte de la constante de temps du capteur. Compte-tenu de la forme du filtre utilisé pour modéliser l'inertie du capteur, les deux signaux peuvent prendre à un moment donné des valeurs identiques et conduire à une annulation du signal d'erreur de traînage alors que le capteur de température n'est pas dans une phase de fonctionnement stabilisée. Par conséquent, dans un tel contexte, il n'est pas pertinent d'utiliser le signal de mesure issu du capteur.

Afin d'éviter ce problème, l'invention propose, lorsqu'une telle situation est détectée, de maintenir la valeur courante du paramètre K utilisée ou tout du moins de s'assurer qu'elle ne varie pas trop par rapport à cette valeur courante (et en tout état de cause l'empêcher de devenir nulle). Un tel mécanisme est aussi connu sous le nom de « limiteur de gradient ».

La détection des transitoires rapides est préférentiellement mise en œuvre en tenant compte de la vitesse de rotation du moteur : plus spécifiquement, on détecte que la température connaît une succession de variations rapides lorsqu'une variation d'une vitesse de rotation du moteur d'aéronef est supérieure à un deuxième seuil prédéterminé.

On pourrait toutefois en variante envisager d'autres paramètres de fonctionnement du moteur qui permettent de détecter des transitoires rapides de la température du fluide auquel on s'intéresse.

Comme mentionné précédemment, dans un mode particulier de réalisation, le signal T4 est égal au signal de mesure T1.

La solution proposée par l'invention dans ce mode de réalisation est alors relativement simple à mettre en œuvre.

Dans un autre mode de réalisation, le signal T4 est obtenu en ajoutant au signal de mesure T1 le signal d'erreur de trainage estimé.

Autrement dit, dans ce mode de réalisation, on combine les avantages de l'invention avec ceux des techniques de compensation de l'erreur de trainage, ce qui permet d'améliorer la robustesse du signal de température obtenu.

En effet, on note que lorsque l'on se trouve dans une phase stabilisée du capteur, l'erreur de trainage est nulle. Par conséquent, le signal « corrigé » T4 correspond bien dans ce cas au signal de mesure T1.

En revanche, en transitoire, en utilisant un signal de mesure corrigé, on effectue via le paramètre K une interpolation entre deux signaux qui ont une même dynamique. Ceci permet d'améliorer la robustesse de la logique proposée par l'invention et de garantir une meilleure qualité du signal de température obtenu lors des phases transitoires.

En outre, la précision du signal utilisé lors des phases transitoires est améliorée. En effet, du fait de la correction apportée au signal de mesure, on s'affranchit de l'erreur de trainage qui affecte le signal de mesure du capteur de température lors des transitoires de température. L'utilisation de la mesure corrigée permet donc de gagner en précision lors des phases d'interpolation.

L'invention s'appuie sur une estimation de la constante de temps du capteur de température pour déterminer notamment le signal d'erreur de trainage.

Aucune limitation n'est attachée à la façon dont on estime cette constante de temps. On peut par exemple utiliser des abaques comme dans l'état de la technique.

Toutefois, préférentiellement la constante de temps du capteur est estimée en temps réel à partir du signal de mesure T1 et du signal modélisé T2. Par « temps réel », on entend ici qu'on estime la constante de temps du capteur à différents instants, de façon répétée dans le temps (par exemple à des instants espacés d'une période d'échantillonnage Te), pour tenir compte de son évolution en fonction du temps.

Il est possible par exemple d'estimer la constante de temps comme décrit dans le document WO 2010/067009. Ceci permet d'avoir une meilleure estimation de l'erreur de trainage du capteur spécifique qui est utilisé.

A cet effet, par exemple, la constante de temps du capteur peut être estimée en temps réel-en mettant en œuvre les étapes suivantes à un instant donné :

(a) obtention d'un premier signal, respectivement d'un second signal, par dérivation par rapport au temps du signal de mesure T1, respectivement du signal modélisé T2 ;
(b) évaluation d'une différence entre la valeur absolue du premier signal et la valeur absolue du second signal ; et
(c) estimation de la constante de temps du capteur à partir de cette différence.

Cette technique permet de s'affranchir des imperfections, en termes d'estimation absolue de la température, du modèle numérique utilisé pour estimer la température mesurée par le capteur. En effet, du fait de l'utilisation des dérivées du signal de mesure et du signal modélisé dans l'invention, il est suffisant de disposer d'un modèle numérique offrant une bonne représentativité des écarts relatifs de la température mesurée.

Dans un mode particulier de réalisation, les différentes étapes du procédé de traitement d'un signal de température selon l'invention sont déterminées par des instructions de programmes d'ordinateurs.

En conséquence, l'invention vise aussi un programme d'ordinateur sur un support d'informations, ce programme étant susceptible d'être mis en oeuvre dans un système de traitement ou plus généralement dans un ordinateur, ce programme comportant des instructions adaptées à la mise en œuvre des étapes d'un procédé de traitement tel que décrit ci-dessus.

L'invention vise également un programme d'ordinateur sur un support d'informations, ce programme étant susceptible d'être mis en œuvre dans un dispositif de réseau ou plus généralement dans un ordinateur, ce programme comportant des instructions adaptées à la mise en œuvre des étapes d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Comme mentionné précédemment, l'invention a une application privilégiée mais non limitative dans le domaine de l'aéronautique.

Selon un autre aspect l'invention vise un moteur d'aéronef comprenant au moins un capteur apte à délivrer un signal de mesure T1 d'une température et un système de traitement du signal de mesure T1 délivré par le capteur conforme à l'invention.

Dans un mode particulier de réalisation, le moteur comprend en outre un dispositif de pilotage du moteur d'aéronef configuré pour utiliser le signal de température obtenu par le système de traitement.

On peut également envisager, dans d'autres modes de réalisation, que le procédé de traitement, le système de traitement et le moteur d'aéronef selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système de traitement d'un signal de mesure d'une température, conforme à l'invention, dans un mode particulier de réalisation ;
- la figure 2 représente, sous forme schématique, l'architecture matérielle d'un dispositif 4 de régulation pleine autorité d'un turboréacteur intégrant le système de traitement de la figure 1 ;
- la figure 3 représente, sous forme d'organigramme, les principales étapes d'un procédé de traitement d'un signal de mesure selon l'invention, dans un mode particulier de réalisation dans lequel il est mis en œuvre par le système de traitement représenté sur la figure 1 ;
- la figure 4 représente un modèle numérique pouvant être utilisé par le système de traitement de la figure 1 ;
- la figure 5 représente un exemple de loi de variation du paramètre K utilisé par le système de traitement de la figure 1 ; et
- la figure 6 représente la façon dont la valeur du paramètre K peut être déterminée dans un autre mode de réalisation de l'invention.

Description détaillée d'un mode de réalisation

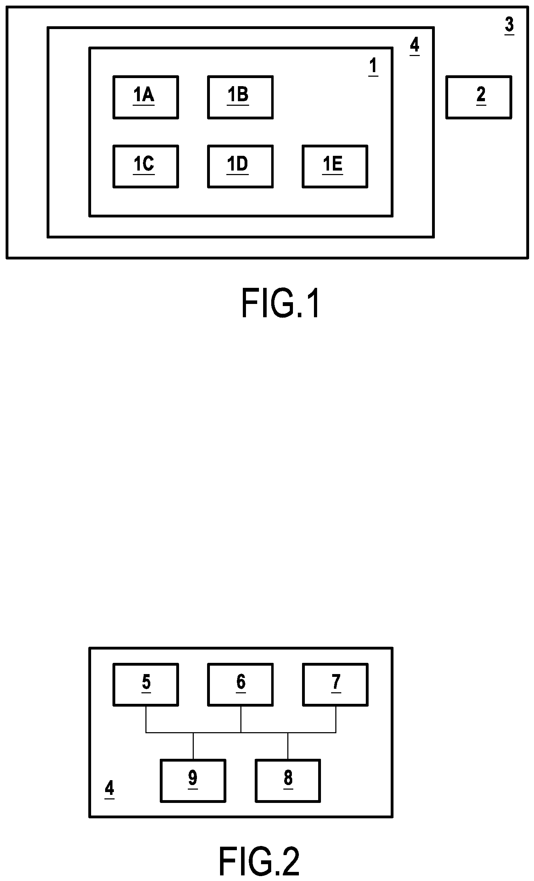

La **figure 1** représente, dans un mode particulier de réalisation, un système de traitement 1 conforme à l'invention, et configuré pour traiter un signal de mesure T1 délivré par un capteur de température 2 présentant une inertie thermique.

Dans l'exemple envisagé à la figure 1, le système 1 de traitement équipe un moteur d'aéronef 3, et plus spécifiquement dans un turboréacteur double corps double flux propulsant un avion. Le système de traitement 1 est intégré ici dans le dispositif 4 de régulation pleine autorité de l'avion propulsé par le turboréacteur (ou couplé à ce dispositif), connu également sous le nom de FADEC (Full Authority Digital Engine Control), celui-ci étant configuré pour utiliser lors du pilotage et de la régulation du turboréacteur, le signal résultant du traitement opéré par le système 1 de traitement sur le signal de mesure T1.

Dans l'exemple envisagé à la figure 1, la température mesurée par le capteur de température 2 est la température $T_{25}$ de l'air en entrée du compresseur haute-pression du turboréacteur 3. Bien entendu, l'invention s'applique également à d'autres températures de fluide s'écoulant dans le turboréacteur et pouvant être mesurées au moyen de capteurs de température tels que le capteur 2.

L'invention peut également être mise en œuvre dans d'autres contextes que le contexte aéronautique dans lesquels est utilisé un capteur de température présentant une inertie thermique.

Dans l'exemple envisagé à la figure, le dispositif 4 de régulation pleine autorité de l'avion a l'architecture matérielle d'un ordinateur telle que représentée schématiquement à la **figure 2.**

Il comprend notamment un processeur 5, une mémoire vive 6, une mémoire morte 7, une mémoire flash non volatile 8, ainsi que des moyens de communication 9 comprenant une ou plusieurs interfaces de communication. Ces moyens de communication 9 permettent notamment au dispositif 4 de régulation pleine autorité de l'avion d'émettre des commandes de pilotage ou de régulation à destination de divers actionneurs et autres équipements du turboréacteur 3, et de recevoir différents signaux, notamment de capteurs équipant le turboréacteur, tels que par exemple le signal de température T1 mesuré par le capteur de température 2. Aucune limitation n'est attachée à la nature des interfaces de communication mis en œuvre entre les différents équipements du turboréacteur et le dispositif 4 de régulation pleine autorité de l'avion (ex. bus numériques, etc.).

La mémoire morte 7 du dispositif 4 de régulation pleine autorité de l'avion constitue un support d'enregistrement conforme à l'invention, lisible par le processeur 5 et sur lequel est enregistré un programme d'ordinateur PROG conforme à l'invention comportant des instructions pour l'exécution des étapes du procédé de traitement selon l'invention.

Ce programme d'ordinateur PROG définit des modules fonctionnels (et logiciels ici) du dispositif 4 de régulation pleine autorité de l'avion et plus précisément du système de traitement 1 incorporé dans le dispositif 4 de régulation pleine autorité de l'avion. Ces modules fonctionnels sont configurés pour mettre en œuvre les étapes du procédé de traitement selon l'invention, et s'appuient sur et/ou commandent les éléments matériels 5-9 du dispositif 4 de régulation pleine autorité de l'avion cités précédemment. Ils comprennent notamment ici, comme illustré sur la figure 1 :

- un module de modélisation numérique 1A, configuré pour modéliser la température $T_{25}$ mesurée par le capteur 2, au moyen d'un signal modélisé T2. Ce module de modélisation numérique 1A est adapté à modéliser le signal de mesure qui serait délivré par le capteur de température 2 si celui-ci fonctionnait sans défaut lié à sa constante de temps ou de façon équivalente si celui-ci avait une constante de temps nulle ;
- un premier module d'estimation 1B, configuré pour estimer la constante de temps $\tau$ du capteur 2 ;
- un module de filtrage 1C, configuré pour filtrer le signal modélisé T2, le filtrage mis en oeuvre par le module de filtrage 1C étant paramétré par l'estimation de la constante de temps $\tau$ du capteur 2 réalisée par le module d'estimation 1B ;
- un deuxième module d'estimation 1D, configuré pour estimer un signal d'erreur de trainage noté $\varepsilon_{lag}$ pour le capteur de température 2, à partir du signal modélisé T2 fourni par le module de modélisation numérique 1A et du signal T3 obtenu par filtrage du signal modélisé par le module de filtrage 1B ;
- un module d'obtention 1E, configuré pour obtenir un signal de température noté dans la suite T, en ajoutant à un signal T4 dérivé du signal de mesure T1, le produit d'un paramètre réel K par un signal résultant de la soustraction du signal modélisé T2 au signal T4 dérivé du signal de mesure T1. Conformément à l'invention, la valeur du paramètre K appliqué par le module d'obtention varie dans le temps et dépend de la valeur du signal d'erreur de trainage $\varepsilon_{lag}$ estimé par le module d'estimation, comme détaillé davantage ultérieurement.

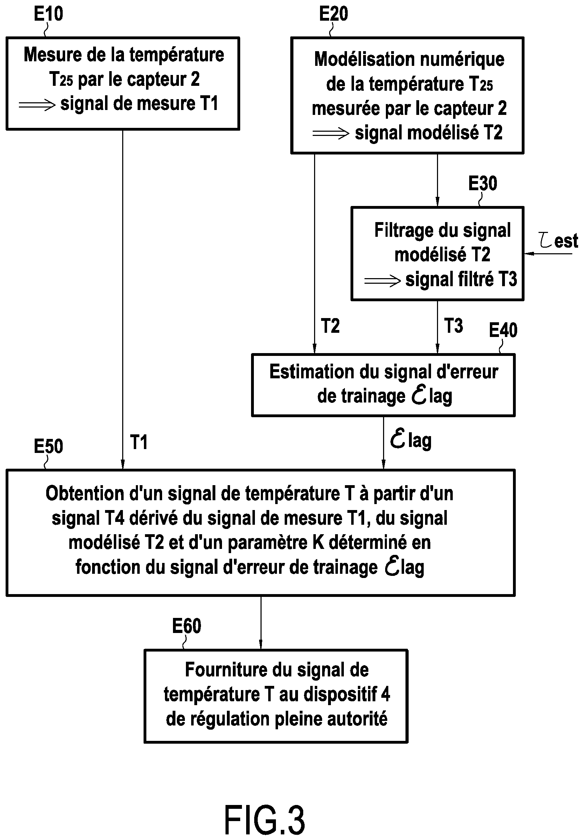

Les fonctions de ces différents modules et la façon dont ils opèrent sont décrites plus en détail ultérieurement en référence aux figures 3 à 6 dans différents modes de réalisation de l'invention.

En variante, les modules 1A-1E peuvent être implémentés au moyen de composants matériels électroniques.

Dans la suite de la description, tous les signaux considérés sont des signaux temporels échantillonnés à une période d'échantillonnage Te. Cette période d'échantillonnage Te est, par exemple, de l'ordre de 20 à 40 ms. De façon connue, elle dépend notamment de la dynamique de la température mesurée. On note cependant que l'invention peut également être mise en œuvre avec des signaux continus variant en fonction du temps t.

La **figure 3** illustre les principales étapes d'un procédé selon l'invention de traitement d'un signal de mesure T1 délivré par le capteur de température 2, dans un mode particulier de réalisation dans lequel il est mis en œuvre par le système de traitement 1. Ces étapes sont répétées à chaque instant d'échantillonnage t=nTe, où n désigne un entier positif ou nul.

On suppose que le capteur de température 2 mesure à l'instant t=nTe, n≥0, la température $T_{25}$ en entrée du compresseur haute-pression du turboréacteur et fournit, en réponse à cette mesure, un signal T1(nTe) représentatif de cette mesure (étape E10).

Le système de traitement 1, via son module de modélisation numérique 1A, génère par ailleurs un signal modélisé T2(nTe) modélisant numériquement la température $T_{25}$ mesurée par le capteur de température 2. Le signal modélisé T2 par le module de modélisation numérique 1A est représentatif du signal de mesure qui serait délivré par le capteur de température 2 si celui-ci fonctionnait sans défaut lié à sa constante de temps (i.e. pas d'inertie thermique) ou de façon équivalente si celui-ci avait une constante de temps nulle.

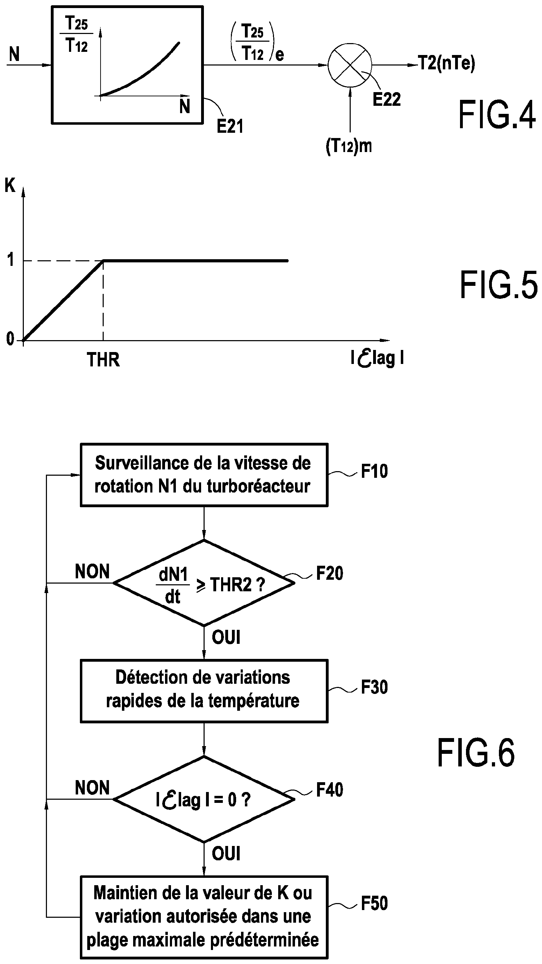

La **figure 4** représente sous forme schématique, un exemple de modèle numérique pouvant être utilisé par le module de modélisation numérique 1A pour générer le signal modélisé T2.

Selon cet exemple, le module de modélisation numérique 1A utilise, pour générer le signal modélisé T2, une mesure de la température de l'air à l'entrée de la soufflante du turboréacteur, notée $(T_{12})_m$, ainsi qu'une mesure notée $(N)_m$ de la vitesse de rotation N de la soufflante du turboréacteur, réalisées à l'instant nTe. Ces mesures peuvent être obtenues via des capteurs connus en soi dûment placés dans le turboréacteur. On suppose par exemple ici qu'il n'y a pas de réducteur entre l'arbre du compresseur basse pression et la soufflante du turboréacteur de sorte que la vitesse de rotation N est égale au régime N1 du compresseur basse pression et est fournie par un capteur permettant de mesurer ce régime de rotation.

Cet exemple n'est donné qu'à titre illustratif et en variante, un capteur dédié peut être utilisé pour mesurer la vitesse de rotation N.

Plus spécifiquement, le module de modélisation numérique 1A estime, à partir de la mesure $(N)_m$ de la vitesse de rotation, un rapport adiabatique de températures $T_{25}/T_{12}$ (étape E21). Ce rapport est estimé ici en utilisant une courbe prédéterminée représentant l'évolution du rapport de températures $T_{25}/T_{12}$ en fonction de la vitesse de rotation N de la soufflante du turboréacteur. Une telle courbe est connue de l'homme du métier et n'est pas décrite plus en détail ici.

L'estimation $(T_{25}/T_{12})_e$ ainsi obtenue du rapport $T_{25}/T_{12}$ est ensuite multipliée par la mesure de la température $(T_{12})_m$ (étape E22). Le module de modélisation numérique 1A obtient de cette manière le signal modélisé T2 à l'instant nTe.

En variante, un modèle numérique plus élaboré et plus précis de la température mesurée par le capteur 2 peut être utilisé par le module de modélisation numérique 1A. Un tel modèle est décrit notamment dans le document US 5,080,496.

En référence à la figure 3, le signal modélisé T2 généré par le module de modélisation numérique 1A est ensuite filtré par le module de filtrage 1C, générant un signal filtré à l'instant nTe noté T3(nTe) (étape E30). Dans l'exemple envisagé ici, le module de filtrage 1C applique au signal T2 un filtre du premier ordre dont la fonction de transfert H($p$) est donnée par :

$$H(p) = \frac{1}{1 + \tau_{est}p}$$

où p désigne une variable complexe et $\tau_{est}$ désigne une estimation de la constante de temps $\tau$ du capteur 2 réalisée par le premier module d'estimation 1B du système de traitement 1.

L'estimation de la constante de temps $\tau$ du capteur 2 peut être réalisée de diverses façons par le premier module d'estimation 1B.

Le premier module d'estimation 1B peut par exemple procéder de façon similaire ou identique à ce qui est décrit dans le document WO 2010/067009 et estimer une valeur de la constante de temps $\tau$ du capteur 2 en temps réel (autrement dit à l'instant nTe considéré), à partir du signal de mesure T1(nTe) et du signal modélisé T2(nTe).

Plus précisément, pour estimer la valeur $\tau_{est}$ de la constante de temps du capteur 2, le premier module d'estimation 1B dérive le signal de mesure T1 et le signal de mesure T2 et obtient les signaux S1 et S2 suivants :

$$S1(nTe) = \frac{T1(nTe) - T1((n-1)Te)}{Te}$$

$$S2(nTe) = \frac{T2(nTe) - T2((n-1)Te)}{Te}$$

Puis, le premier module d'estimation 1B évalue ensuite un signal de différence EPS selon :

$$EPS = |S1(nTe)| - |S2(nTe)|$$

Le signal |S1[$nTe$]| est par ailleurs comparé à un prédéfini s afin de détecter une valeur faible du signal S1, représentative d'une phase de stabilité thermique. Le seuil prédéfini s sera ainsi choisi de sorte à permettre cette détection. La valeur de la différence EPS est forcée à zéro si |S1[$nTe$]| est inférieure au seuil s.

Puis le premier module d'estimation 1B utilise un estimateur de type correcteur intégral (ou filtre correcteur intégral), paramétré par un gain G (G étant un nombre réel) pour estimer la valeur de la constante de temps $\tau_{est}$ à l'instant nTe selon :

$$\tau_{est}(nTe) = \tau_{est}((n-1)Te) + G \times EPS$$

où $\tau_{est}[(n-1)Te]$ désigne la valeur de la constante estimée $\tau_{est}$ à l'instant *(n-1)Te.* Le choix de la valeur initiale de la constante de temps $\tau_0$ et de la valeur du gain G résulte d'un compromis entre performance de l'estimation et rapidité de convergence de l'algorithme adaptatif. On peut, par exemple, choisir la valeur initiale de la constante de temps $\tau_0$ dans un abaque fourni par le constructeur du capteur de température 2 et tel qu'utilisé dans les techniques de l'art antérieur.

En variante, le premier module d'estimation 1B peut utiliser un tel abaque pour déterminer une valeur moyenne de la constante de temps en fonction d'un débit d'écoulement du fluide dans lequel se trouve le capteur de température 2 (à partir d'une mesure de ce débit d'écoulement fournie par un capteur approprié du turboréacteur), et se servir de cette valeur moyenne comme estimation $\tau_{est}$ de la constante de temps dans le filtre appliqué par le module de filtrage 1C.

En référence à la figure 3, le signal modélisé T2 généré par le module de modélisation numérique 1A et le signal filtré T3 fourni par le module de filtrage 1C sont ensuite utilisés par le module d'estimation 1D pour estimer un signal d'erreur de trainage $\varepsilon_{lag}$ à l'instant nTe pour le capteur de température 2 (étape E40). Dans le mode de réalisation décrit ici, le module d'estimation 1D estime le signal d'erreur de trainage $\varepsilon_{lag}$ à l'instant nTe en soustrayant le signal T3(nTe) au signal T2(nTe) soit :

$$\varepsilon_{lag}(nTe)= T3(nTe) - T2(nTe).$$

Le signal d'erreur de trainage $\varepsilon_{lag}(nTe)$ déterminé par le module d'estimation 1D est ensuite utilisé par le module d'obtention 1E du système de traitement pour obtenir un signal de température noté T(nTe) destiné au dispositif 4 de régulation pleine autorité de l'avion afin de lui permettre de réguler et de piloter le turboréacteur 3 (étape E50).

Plus spécifiquement, le module d'obtention 1E obtient le signal de température à l'instant nTe en ajoutant à un signal T4 dérivé du signal de mesure T1, le produit d'un paramètre réel K, supérieur ou égal à 0, par un signal résultant de la soustraction du signal T4 dérivé du signal de mesure T1 au signal modélisé T2, soit :

$$T(nTe)=T4(nTe)+K(nTe)[T4(nTe)-T2(nTe)]$$

Dans un premier mode de réalisation, le signal T4 est pris égal au signal de mesure T1. Autrement dit, le module d'obtention 1E détermine le signal T(nTe) de la façon suivante :

$$T(nTe)=T1(nTe)+K(nTe)[T2(nTe)-T1(nTe)]$$

Dans un deuxième mode de réalisation, le signal T4 est obtenu en ajoutant au signal de mesure T1 le signal d'erreur de trainage estimé $\varepsilon_{lag}(nTe)$. Autrement dit, le signal T4 correspond à un signal dans lequel l'erreur de trainage a été compensée, et :

$$T(nTe)=[T1(nTe)+ \varepsilon_{lag}(nTe)]+K(nTe)[[T1(nTe)+ \varepsilon_{lag}(nTe)]-T2(nTe)]$$

Conformément à l'invention, le paramètre K appliqué par le module d'obtention 1E varie dans le temps et dépend de la valeur du signal d'erreur de trainage $\varepsilon_{lag}(nTe)$ estimé à l'instant nTe.

Dans le mode de réalisation considéré ici, on considère une variation linéaire de la valeur de K en fonction du signal d'erreur de trainage, telle qu'illustrée à la **figure 5**. Plus spécifiquement :

- la valeur de K est prise égale à 0 lorsque le signal d'erreur de trainage est nul (ou sensiblement nul) ;
- la valeur de K est prise égale à 1 lorsque la valeur absolue du signal d'erreur de trainage est supérieure à un seuil prédéterminé THR, i.e. lorsque $|\varepsilon_{lag}(nTe)| \geq THR$ ; et
- la valeur de K varie de façon linéaire entre 0 et 1 lorsque la valeur absolue du signal d'erreur de trainage est comprise entre 0 et THR, i.e. lorsque $0<|\varepsilon_{lag}(nTe)| < THR$.

Le seuil THR peut être déterminé expérimentalement, de sorte à caractériser le comportement transitoire du capteur de température 2. En effet, comme mentionné précédemment, ce seuil a pour but de distinguer lorsque le capteur de température 2 se trouve dans une phase transitoire, dans laquelle il est plus précis de considérer le signal T2 issu du modèle numérique plutôt que le signal de mesure T1 issu du capteur ou le signal de mesure compensé avec l'erreur de trainage estimée. On peut aisément déterminer le seuil THR en réalisant des simulations correspondant à des scénarii pertinents et en réglant de manière itérative le seuil de sorte à obtenir la meilleure représentativité de la température mesurée.

Dans le mode de réalisation décrit ici, le signal de température T obtenu par le module d'obtention 1E est ensuite fourni au dispositif 4 de régulation pleine autorité de l'avion pour réguler et piloter le turboréacteur 3 (étape E60).

La **figure 6** illustre la façon dont la valeur de K est déterminée par le module d'obtention 1E en fonction de la valeur du signal d'erreur de trainage dans un deuxième mode de réalisation de l'invention.

Dans ce deuxième mode de réalisation, il est tenu compte de phénomènes, tels qu'une succession d'accélérations et de décélérations du turboréacteur ou des agaceries, pouvant se traduire par des transitoires rapides de la température (succession de hausses et de baisses de la température). Durant de tels phénomènes, en raison de la brutalité et de la rapidité des hausses et des baisses de température, le capteur de température 2 n'atteint pas de phase stabilisée. Toutefois, du fait de la modélisation adoptée et de la façon dont l'erreur de trainage est estimée (en soustrayant le signal modélisé filtré T3 au signal modélisé T2), il se peut que dans un tel contexte de transitoires rapides de la température, l'erreur de trainage soit à un instant nulle (correspondant au « croisement » du modèle numérique utilisé pour générer le signal modélisé T2 et du modèle numérique filtré utilisé pour générer le signal modélisé filtré T3) bien que le capteur de température 2 ne soit pas stabilisé. En une pareille situation, il est préférable comme le capteur de température 2 n'est pas stabilisé, de favoriser le signal T2 issu du modèle numérique (ou tout du moins de maintenir la valeur du paramètre K appliquée avant les transitoires de température) plutôt que de basculer sur le signal de mesure T1 fourni par le capteur de température 2.

Pour mettre en oeuvre cette stratégie, le module d'obtention 1E est configuré, dans ce deuxième mode de réalisation, pour détecter si la température $T_{25}$ subit une succession de variations rapides (étape F10). Cette détection est réalisée en surveillant les variations de la vitesse de rotation N du turboréacteur 3. Dans l'exemple mentionné précédemment d'un turboréacteur ne comprenant pas de réducteur entre l'arbre du compresseur basse pression et la soufflante, cette détection est réalisée en surveillant les variations de la vitesse N1 de rotation du compresseur basse pression du turboréacteur 3 (i.e. N=N1 dans cet exemple).

A cet effet, le module d'obtention 1E utilise une mesure de la vitesse N1 de rotation à l'instant nTe, acquise par un capteur de vitesse connu en soi et dûment positionné dans le turboréacteur 3, et obtient une dérivée dN1(nTe)/dTe de cette mesure à l'instant nTe par exemple de la façon suivante :

$$ dN1(nTe)/dTe = \frac{N1(nTe) - N1((n-1)Te)}{Te} $$

Puis il compare la valeur de la dérivée dN1(nTe)/dTe obtenue par rapport à un seuil THR2 prédéterminé (étape test F20). Comme mentionné précédemment pour le seuil THR, le seuil THR2 peut être déterminé expérimentalement en réalisant différentes simulations et en réglant lors de ces simulations de façon itérative la valeur du seuil THR2 pour obtenir la meilleure représentativité de la température mesurée.

Si la valeur de la dérivée dN1(nTe)/dTe est supérieure au seuil THR2, le module d'obtention 1E considère (i.e. détecte) que la température $T_{25}$ subit une succession de variations rapides (étape F30).

Si simultanément, c'est-à-dire pour le même instant nTe, il détecte que le signal d'erreur de trainage est nul lors de l'étape d'obtention E50 (réponse oui à l'étape test F40), alors pour calculer le signal de température T(nTe), au lieu d'appliquer un paramètre K(nTe) de valeur nulle comme indiqué par la loi de variation de K précédemment décrite en référence aux figures 3 et 5, le module d'obtention 1E maintient la valeur du paramètre K égale à la valeur que ce paramètre avait avant l'instant nTe auquel il a été détecté que dN1(nTe)/dTe était supérieur au seuil THR2 (autrement dit K(nTe)=K((n-1)Te au lieu de K(nTe)=0 comme indiqué par la loi de variation illustrée à la figure 5) (étape F50).

En variante, la valeur du paramètre K adoptée à l'instant nTe peut être modifiée par le module d'obtention 1E, mais n'est autorisée à varier par rapport à la valeur qu'elle avait avant la détection simultanée des variations rapides de la température $T_{25}$ et d'un signal d'erreur de trainage nul que d'une quantité maximale prédéterminée. Cette quantité maximale peut être déterminée expérimentalement, comme décrit précédemment pour les seuils THR et THR2.

En d'autres mots, le module d'obtention 1E utilise un limiteur de gradient pour contraindre la valeur de K à ne pas devenir nulle et à ne pas varier trop fortement durant cette période de transitions rapides de la température mesurée.

On note que le maintien de la valeur du paramètre K, ou le limiteur de gradient, n'intervient que lorsque le module d'obtention 1E détecte une période de transitoires rapides de la température mesurée de façon simultanée avec une annulation du signal d'erreur de trainage. Dans les autres cas de figure, la loi de variation illustrée à la figure 5 est appliquée.

L'invention, quel que soit le mode de réalisation envisagé, permet ainsi d'obtenir un signal de température précis représentatif de la température T25 mesurée par le capteur de température 2 et pouvant être utilisé pour le pilotage et la régulation du turboréacteur.

**Revendications**

**1.** Procédé de traitement d'un signal de mesure T1 d'une température délivré par un capteur, comprenant :

- une étape (E20) de modélisation numérique, par un signal modélisé T2, de la température mesurée par le capteur ;
- une étape (E40) d'estimation d'un signal d'erreur de trainage pour ce capteur, à partir du signal modélisé T2 et d'un signal T3 obtenu par filtrage du signal modélisé, ce filtrage étant paramétré par une estimation d'une constante de temps ($\tau$) du capteur ;

ledit procédé de traitement étant **caractérisé en ce qu'**il comprend en outre une étape d'obtention (E50) d'un signal de température, en ajoutant à un signal T4, dérivé du signal de mesure T1, le produit d'un paramètre réel K par un signal résultant de la soustraction du signal T4 au signal modélisé T2, et **en ce que** la valeur du paramètre K appliquée lors de l'étape d'obtention varie dans le temps et dépend de la valeur du signal d'erreur de trainage estimé, ladite valeur du paramètre K appliquée étant prise égale à 0 lorsque la valeur du signal d'erreur de trainage est nulle et à 1 lorsque la valeur absolue du signal d'erreur de trainage est supérieure à un premier seuil prédéterminé.

2. Procédé de traitement selon la revendication 1 dans lequel la valeur du paramètre K varie de façon linéaire entre les valeurs 0 et 1 en fonction de la valeur du signal d'erreur de trainage estimé lorsque la valeur absolue du signal d'erreur de trainage varie entre la valeur nulle et le premier seuil prédéterminé.

3. Procédé de traitement selon la revendication 1 ou 2 dans lequel ladite température est une température d'un fluide s'écoulant dans un moteur d'aéronef et dans lequel, lorsqu'il est détecté simultanément F20,F40) que la valeur du signal d'erreur de trainage estimé est nulle et que ladite température connaît une succession de variations rapides, la valeur du paramètre K est maintenue égale à la valeur qu'il avait avant ladite détection ou n'est autorisée à varier par rapport à cette valeur que d'une quantité maximale prédéterminée (F50).

4. Procédé de traitement selon la revendication 3 dans lequel il est détecté (F20) que la température connaît une succession de variations rapides lorsqu'une variation d'une vitesse de rotation du moteur d'aéronef est supérieure à un deuxième seuil prédéterminé.

5. Procédé de traitement selon l'une quelconque des revendications 1 à 4 dans lequel le signal T4 est égal au signal de mesure T1.

6. Procédé de traitement selon l'une quelconque des revendications 1 à 4 dans lequel le signal T4 est obtenu en ajoutant au signal de mesure T1 le signal d'erreur de trainage estimé.

7. Procédé de traitement selon l'une quelconque des revendications 1 à 6 dans lequel la constante de temps du capteur est estimée en temps réel à partir du signal de mesure T1 et du signal modélisé T2.

8. Procédé de traitement selon la revendication 7 dans lequel la constante de temps du capteur est estimée en fonction du temps en mettant en œuvre les étapes suivantes :

(d) obtention d'un premier signal, respectivement d'un second signal, par dérivation par rapport au temps du signal de mesure T1, respectivement du signal modélisé T2 ;
(e) évaluation d'une différence entre la valeur absolue du premier signal et la valeur absolue du second signal ; et
(f) estimation de la constante de temps du capteur à partir de cette différence.

9. Système de traitement (1) d'un signal de mesure T1 d'une température délivré par un capteur (2), comprenant :

- un module (1A) de modélisation numérique, configuré pour modéliser la température mesurée par le capteur au moyen d'un signal modélisé T2 ; et
- un module d'estimation (1D), configuré pour estimer un signal d'erreur de trainage pour ce capteur à partir du signal modélisé T2 et d'un signal T3 obtenu par filtrage du signal modélisé, le filtrage étant paramétré par une estimation d'une constante de temps du capteur ;

ledit système de traitement (1) étant **caractérisé en ce qu'**il comprend en outre un module d'obtention (1E), configuré pour obtenir un signal de température en ajoutant à un signal T4 dérivé du signal de mesure T1, le produit d'un paramètre réel K par un signal résultant de la soustraction du signal T4 au signal modélisé T2, et **en ce que** la valeur du paramètre K appliqué par le module d'obtention dépend de la valeur du signal d'erreur de trainage estimé par le module d'estimation, ladite valeur du paramètre K appliquée par le module d'obtention étant prise égale à 0 lorsque la valeur du signal d'erreur de trainage est nulle et à 1 lorsque la valeur absolue du signal d'erreur de trainage est supérieure à un premier seuil prédéterminé.

10. Moteur d'aéronef (3) comprenant au moins un capteur (2) apte à délivrer un signal de mesure T1 d'une température et un système de traitement (1) du signal de mesure T1 délivré par le capteur, ledit système de traitement étant conforme à la revendication 9.

11. Moteur d'aéronef (3) selon la revendication 10 comprenant en outre un dispositif (4) de pilotage du moteur d'aéronef configuré pour utiliser le signal de température obtenu par le système de traitement.

**Patentansprüche**

1.  Verfahren zur Verarbeitung eines von einem Sensor gelieferten Messsignals T1 einer Temperatur, umfassend:

    - einen Schritt (E20) des digitalen Modellierens der von dem Sensor gemessenen Temperatur durch ein modelliertes Signal T2;
    - einen Schritt (E40) des Schätzens eines Schleppfehlersignals für diesen Sensor ausgehend von dem modellierten Signal T2 und einem Signal T3, das durch Filtern des modellierten Signals erhalten wird, wobei dieses Filtern durch eine Schätzung einer Zeitkonstante ($\tau$) des Sensors parametrisiert wird;

    wobei das Verarbeitungsverfahren **dadurch gekennzeichnet ist, dass** es ferner einen Schritt des Gewinnens (E50) eines Temperatursignals umfasst, indem zu einem Signal T4, das aus dem Messsignal T1 abgeleitet ist, das Produkt eines realen Parameters K mit einem Signal addiert wird, das sich aus der Subtraktion des Signals T4 von dem modellierten Signal T2 ergibt, und dass sich der Wert des Parameters K, der während des Schritts des Gewinnens angewendet wird, über die Zeit ändert und von dem Wert des geschätzten Schleppfehlersignals abhängt, wobei der Wert des angewendeten Parameters K gleich 0 genommen wird, wenn der Wert des Schleppfehlersignals Null ist, und gleich 1 genommen wird, wenn der Absolutwert des Schleppfehlersignals größer als ein erster vorgegebener Schwellenwert ist.

2.  Verarbeitungsverfahren nach Anspruch 1, wobei sich der Wert des Parameters K als Funktion des Werts des geschätzten Schleppfehlersignals linear zwischen den Werten 0 und 1 ändert, wenn sich der Absolutwert des Schleppfehlersignals zwischen dem Wert Null und dem ersten vorbestimmten Schwellenwert ändert.

3.  Verarbeitungsverfahren nach Anspruch 1 oder 2, wobei die Temperatur eine Temperatur eines in einem Flugzeugtriebwerk strömenden Fluids ist und wobei, wenn gleichzeitig erfasst wird (F20, F40), dass der Wert des geschätzten Schleppfehlersignals Null ist und die Temperatur eine Folge von schnellen Änderungen erfährt, der Wert des Parameters K gleich dem Wert gehalten wird, den er vor der Erfassung hatte, oder nur um einen vorbestimmten maximalen Betrag von diesem Wert abweichen darf (F50).

4.  Verarbeitungsverfahren nach Anspruch 3, wobei erfasst wird (F20), dass die Temperatur eine Folge schneller Änderungen erfährt, wenn eine Änderung einer Drehzahl des Flugzeugtriebwerks größer als ein zweiter vorbestimmter Schwellenwert ist.

5.  Verarbeitungsverfahren nach einem der Ansprüche 1 bis 4, wobei das Signal T4 gleich dem Messsignal T1 ist.

6.  Verarbeitungsverfahren nach einem der Ansprüche 1 bis 4, wobei das Signal T4 durch Addieren des geschätzten Schleppfehlersignals zu dem Messsignal T1 erhalten wird.

7.  Verarbeitungsverfahren nach einem der Ansprüche 1 bis 6, wobei die Zeitkonstante des Sensors in Echtzeit ausgehend von dem Messsignal T1 und dem modellierten Signal T2 geschätzt wird.

8.  Verarbeitungsverfahren nach Anspruch 7, wobei die Zeitkonstante des Sensors als Funktion der Zeit geschätzt wird, indem die folgenden Schritte durchgeführt werden:

    (d) Gewinnen eines ersten Signals bzw. eines zweiten Signals durch Ableitung des Messsignals T1 bzw. des modellierten Signals T2 nach der Zeit;
    (e) Auswerten einer Differenz zwischen dem Absolutwert des ersten Signals und dem Absolutwert des zweiten Signals; und
    (f) Schätzen der Zeitkonstante des Sensors ausgehend von dieser Differenz.

9.  System (1) zur Verarbeitung eines von einem Sensor (2) gelieferten Messsignals T1 einer Temperatur, umfassend:

    - ein Modul (1A) zur digitalen Modellierung, das dafür konfiguriert ist, die von dem Sensor gemessene Temperatur mithilfe eines modellierten Signals T2 zu modellieren; und
    - ein Modul (1D) zur Schätzung, das dafür konfiguriert ist, ein Schleppfehlersignal für diesen Sensor ausgehend von dem modellierten Signal T2 und einem Signal T3 zu schätzen, das durch Filtern des modellierten Signals erhalten wird, wobei das Filtern durch eine Schätzung einer Zeitkonstante des Sensors parametrisiert wird;

wobei das Verarbeitungssystem (1) **dadurch gekennzeichnet ist, dass** es ferner ein Modul (1E) zum Gewinnen eines Temperatursignals umfasst, indem zu einem Signal T4, das aus dem Messsignal T1 abgeleitet ist, das Produkt eines realen Parameters K mit einem Signal addiert wird, das sich aus der Subtraktion des Signals T4 von dem modellierten Signal T2 ergibt, und dass sich der Wert des Parameters K, der durch das Gewinnungsmodul angewendet wird, von dem Wert des von dem Schätzungsmodul geschätzten Schleppfehlersignals abhängt, wobei der Wert des von dem Gewinnungsmodul angewendeten Parameters K gleich 0 genommen wird, wenn der Wert des Schleppfehlersignals Null ist, und gleich 1 genommen wird, wenn der Absolutwert des Schleppfehlersignals größer als ein erster vorgegebener Schwellenwert ist.

10. Flugzeugtriebwerk (3) umfassend mindestens einen Sensor (2), der in der Lage ist, ein Messsignal T1 einer Temperatur zu liefern, und ein System (1) zur Verarbeitung des von dem Sensor gelieferten Messsignals T1, wobei das Verarbeitungssystem Anspruch 9 entspricht.

11. Flugzeugtriebwerk (3) nach Anspruch 10, das ferner eine Vorrichtung (4) zum Steuern des Flugzeugtriebwerks umfasst, die dafür konfiguriert ist, das von dem Verarbeitungssystem gewonnene Temperatursignal zu verwenden.

**Claims**

1. A method for processing a measurement signal T1 of a temperature delivered by a sensor, comprising:

   - a step (E20) of digital modeling, by a modeled signal T2, of the temperature measured by the sensor;
   - a step (E40) of estimating a lag error signal for this sensor, on the basis of the modeled signal T2 and of a signal T3 obtained by filtering the modeled signal, this filtering being parameterized by an estimate of a time constant ($\tau$) of the sensor;

   said processing method being **characterized in that** it further comprises a step (E50) of obtaining a temperature signal, by adding to a signal T4, derived from the measurement signal T1 the product of a real parameter K by a signal resulting from the subtraction of the signal T4 from the modeled signal T2, and **in that** the value of the parameter K applied during the obtaining step varies over time and depends on the value of the estimated lag error signal, said applied value of the parameter K being taken as equal to 0 when the value of the lag error signal is zero and to 1 when the absolute value of the lag error signal is greater than a first predetermined threshold.

2. The processing method as claimed in claim 1 wherein the value of the parameter K varies linearly between the values 0 and 1 as a function of the value of the lag error signal estimated when the absolute value of the lag error signal is varying between the zero value and the first predetermined threshold.

3. The processing method as claimed in claim 1 or 2 wherein said temperature is a temperature of a fluid flowing through an aircraft engine and wherein, when it is detected simultaneously (F20,F40) that the value of the estimated lag error signal is zero and that said temperature is undergoing a succession of rapid variations, the value of the parameter K is kept equal to the value that it had before said detection or is permitted to vary with respect to this value only by a predetermined maximum quantity (F50).

4. The processing method as claimed in claim 3 wherein it is detected (F20) that the temperature is undergoing a succession of rapid variations when a variation in a rotation speed of the aircraft engine is greater than a second predetermined threshold.

5. The processing method as claimed in any of claims 1 to 4 wherein the signal T4 is equal to the measurement signal T1.

6. The processing method as claimed in any of claims 1 to 4 wherein the signal T4 is obtained by adding to the measurement signal T1 the estimated lag error signal.

7. The processing method as claimed in any of claims 1 to 6 wherein the time constant of the temperature sensor is estimated in real time on the basis of the measurement signal T1 and of the modeled signal T2.

8. The processing method as claimed in claim 7 wherein the time constant of the sensor is estimated as a function of time by implementing the following steps:

(a) obtaining a first signal and a second signal respectively, by derivation with respect to time of the measurement signal T1 and the modeled signal T2 respectively;

(b) evaluating a difference between the absolute value of the first signal and the absolute value of the second signal; and

(c) estimating the time constant of the sensor on the basis of this difference.

9.  A system (1) for processing a measurement signal T1 of a temperature delivered by a sensor (2), comprising:

    - a digital modeling module (1A), configured to model the temperature measured by the sensor by means of a modeled signal T2; and
    - an estimating module (ID), configured to estimate a lag error signal for this sensor, on the basis of the modeled signal T2 and of a signal T3 obtained by filtering the modeled signal, this filtering being parameterized by an estimate of a time constant of the sensor;

    said processing system (1) being **characterized in that** it further comprises an obtaining module (1E), configured to obtain a temperature signal by adding to a signal T4 derived from the measurement signal T1 the product of a real parameter K by a signal resulting from the subtraction of the signal T4 from the modeled signal T2, and **in that** the value of the parameter K applied by the obtaining module depends on the value of the lag error signal estimated by the estimating module, said value of the parameter K applied by the estimating module being taken as equal to 0 when the value of the lag error signal is zero and to 1 when the absolute value of the lag error signal is greater than a first predetermined threshold.

10. An aircraft engine (3) comprising at least one sensor (2) able to deliver a measurement signal T1 of a temperature and a system (1) for processing the measurement signal T1 delivered by the sensor, said processing system being in accordance with claim 9.

11. The aircraft engine (3) as claimed in claim 10 further comprising a device (4) for controlling the aircraft engine configured to use the temperature signal obtained by the processing system.

FIG.1

FIG.2

**E10**

Mesure de la température T25 par le capteur 2 $\Longrightarrow$ signal de mesure T1

**E20**

Modélisation numérique de la température T25 mesurée par le capteur 2 $\Longrightarrow$ signal modélisé T2

**E30**

Filtrage du signal modélisé T2 $\Longrightarrow$ signal filtré T3

$\tau$est

T2    T3    **E40**

Estimation du signal d'erreur de trainage $\mathcal{E}$lag

$\mathcal{E}$lag

**E50**    T1

Obtention d'un signal de température T à partir d'un signal T4 dérivé du signal de mesure T1, du signal modélisé T2 et d'un paramètre K déterminé en fonction du signal d'erreur de trainage $\mathcal{E}$lag

**E60**

Fourniture du signal de température T au dispositif 4 de régulation pleine autorité

# FIG.3

$$\frac{T_{25}}{T_{12}} \quad \left(\frac{T_{25}}{T_{12}}\right)e \quad \longrightarrow T2(nTe)$$

N → E21 ⊗ E22

$\bar{N}$

$(T_{12})m$

## FIG.4

K

1

THR $|\mathcal{E}\text{lag}|$

## FIG.5

Surveillance de la vitesse de rotation N1 du turboréacteur — F10

NON $\frac{dN1}{dt} \geq$ THR2 ? — F20

OUI

Détection de variations rapides de la température — F30

## FIG.6

NON $|\mathcal{E}\text{lag}| = 0$ ? — F40

OUI

Maintien de la valeur de K ou variation autorisée dans une plage maximale prédéterminée — F50

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5080469 A
- WO 2010067009 A1
- EP 2373965 A1
- US 5080496 A
- WO 2010067009 A